## Europäisches Patentamt
## European Patent Office
## Office européen des brevets

(19)

(11) Numéro de publication: **0 218 486**
**B1**

(12) **FASCICULE DE BREVET EUROPEEN**

(45) Date de publication du fascicule du brevet:
**31.01.90**

(21) Numéro de dépôt: **86401451.9**

(22) Date de dépôt: **30.06.86**

(51) Int. Cl.⁴: **B 23 Q 15/18,** B 23 Q 11/00,
B 23 B 39/16

(54) **Dispositif d'usinage à broches multiples.**

(30) Priorité: **31.07.85 FR 8511757**

(43) Date de publication de la demande:
**15.04.87 Bulletin 87/16**

(45) Mention de la délivrance du brevet:
**31.01.90 Bulletin 90/5**

(84) Etats contractants désignés:
**DE GB IT SE**

(56) Documents cités:
**DD-C- 70 474**
**DE-A- 2 112 883**
**DE-A- 3 310 967**
**GB-A- 1 283 646**
**US-A- 4 082 476**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Durand, Raphael, 4, Beaulieu le Belvédère, F-42100 Saint-Etienne (FR)**

(74) Mandataire: **Durand, Yves Armand Louis et al, Cabinet Z. Weinstein 20, Avenue de Friedland, F-75008 Paris (FR)**

ACTORUM AG

## Description

La présente invention a essentiellement pour objet un dispositif d'usinage multi-broches permettant de réaliser simultanément une pluralité d'usinages sur une même pièce.

Il est déjà connu de pratiquer plusieurs usinages sur une pièce à l'aide d'une unité multi-broches, laquelle pièce est généralement destinée à être assemblée avec d'autres pièces usinées de manière analogue. Bien entendu, avant de lancer en fabrication une série de pièces, les entr'axes des broches sont ajustés aux cotes des dessins.

Mais, pour que l'assemblage de pièces ainsi usinées soit possible, il est nécessaire de prendre des précautions sur le plan thermique en raison de l'écart de dilatation, selon les températures, entre la pièce à usiner et la machine d'usinage. Il résulte en effet de cette différence de dilatation, qu'une pièce usinée à une température différente de la température nominale, ne retrouve pas l'entr'axe nominal, quand elle revient à la température nominale.

Aussi, pour permettre l'assemblage des pièces, on prend généralement un certain nombre de précautions. Le ateliers, les centrales de lubrification et les magasins de stockage sont tous climatisés à la température nominale, ce qui, comme on le comprend, est fort coûteux.

Dans certains cas, on peut usiner les pièces après assemblage, et ensuite mettre un repère sur ces pièces et les désassembler pour leur faire subir les opérations suivantes. Ainsi, au montage, on dispose de pièces repérées qui ont été usinées assemblées à une même température. Mais, comme on le comprend, cette manière de faire exige une manutention longue et coûteuse sur le plan de la main d'œuvre.

On connaît également d'après le document DE-A-2 112 883, und dispositif d'usinage à deux broches parallèles qui sont solidaires d'un socle et dont l'une est réglable par rapport à l'autre qui sert de référence, à l'aide d'un système de déplacement. Mais ce système, qui constitue en quelque sorte un système de compensation, est intrinsèque au dispositif et ne permet pas d'obtenir une excellente précision de réglage de la distance de travail des broches en fonction des variations de température.

Dès lors, la présente invention a pour but de remédier à tous les inconvénients ci-dessus en proposant un dispositif d'usinage qui évite notamment de recourir à la climatisation des locaux ou au repérage des pièces.

A cet effet, l'invention a pour objet un dispositif d'usinage à broches multiples qui permettent d'effectuer simultanément sur une pièce une pluralité d'usinages, dont les axes longitudinaux s'étendent suivant la même direction, et qui sont portées par des blocs supportant chacun une broche d'usinage et montés sur un socle, tandis que la distance entre lesdits axes longitudinaux peut être modifiée selon les températures et que l'un desdits blocs est monté fixe sur le socle pour servir de référence, caractérisé en ce qu'il comprend une plaque munie d'orifices ou logements dans lesquels s'engagent respectivement des piges de mesure portées respectivement par lesdits blocs, ledit bloc servant de référence portant une pige montée ajustée dans l'un des logements de la plaque et tous les autres blocs montés glissants sur le socle portant chacun une pige montée avec jeu dans les autres logements de la plaque, tandis qu'un système de régulation en boucle fermée comportant des capteurs aptes à mesurer le décentrage des piges dans les logements de la plaque et à solliciter des moyens de commande des blocs mobiles pour recentrer les piges associées à ces blocs dans les logements de la plaque, permet de ramener la distance entre les axes longitudinaux des broches à une valeur correspondant à la dilatation de la pièce à usiner.

Ainsi, une pièce usinée à une température quelconque, admettra pour entr'axe d'usinage, celui qu'elle aurait à cette température si elle avait été usinée, à la température nominale, selon l'entr'axe nominal.

Suivant une autre caractéristique de ce dispositif, la plaque comporte un circuit d'homogénéisation thermique dans lequel circule un liquide.

Ce dispositif est encore caractérisé en ce qu'il comprend une centrale d'arrosage qui assure, en circuit fermé, l'alimentation du circuit d'homogénéisation dans la plaque, et l'arrosage de la pièce en cours d'usinage.

D'autres caractéristiques et avantages de l'invention apparaîtront mieux dans la description détaillée qui suit et se réfère aux dessins annexés, donnés uniquement à titre d'exemple, et dans lesquels:

La figure 1 est une vue schématique et en perspective d'une installation d'usinage conforme aux principes de cette invention, et

La figure 2 est une vue suivant la flèche II de la figure 1, de l'ensemble d'usinage multi-broches, la plaque de mesure étant représentée en coupe verticale.

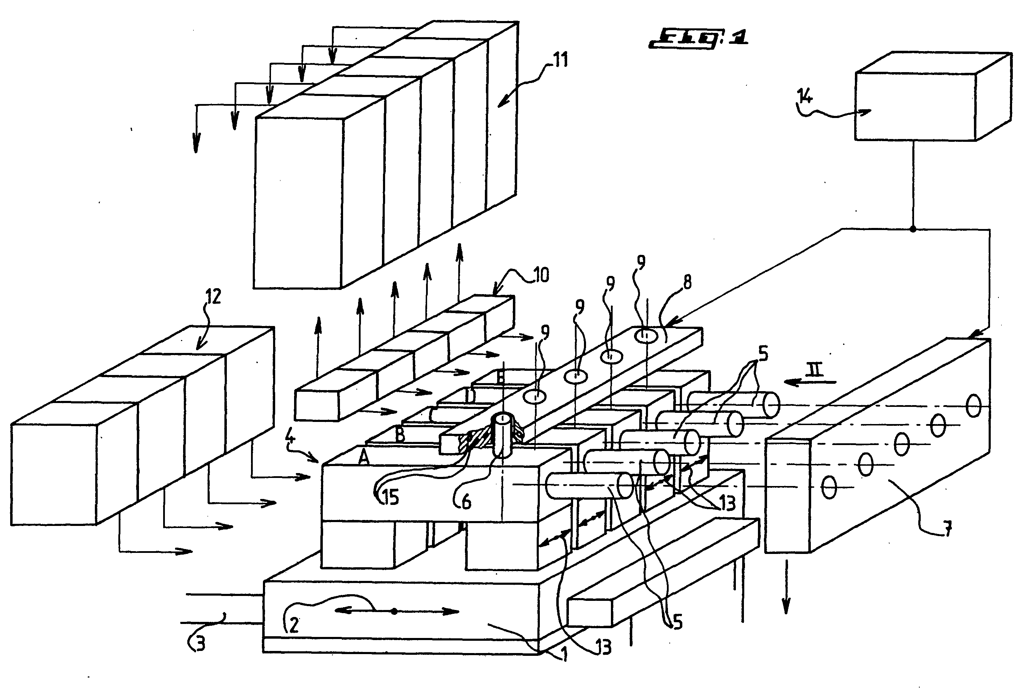

En se reportant notamment à la figure 1, on voit qu'un dispositif d'usinage selon l'invention comprend un socle 1 monté longitudinalement mobile, selon flèche 2, sur des glissières ou analogues 3 et sur lequel socle est monté un ensemble d'usinage 4 se composant, suivant l'exemple représenté, de cinq blocs A, B, C, D, et E munis chacun d'une broche d'usinage 5 et d'une pige de mesure 6 solidaire de la partie supérieure de chaque bloc. Chaque broche d'usinage 5 est appelée à affecter une opération d'usinage sur une même pièce que l'on voit en 7.

Le bloc d'usinage C est monté fixe sur le socle 1, tandis que les autres blocs A, B, D et E, de part et d'autre du bloc fixe, sont mobiles suivant la direction de l'entr'axe, comme montré par les flèches 13.

On a montré en 8 une plaque de mesure munie de logements 9 dans lesquels s'engagent les piges 6 portées respectivement par les blocs d'usinage A, B, C, D et E. La plaque 8 est de préférence réalisée dans le même matériau que celui de la pièce 7, par exemple en alliage d'aluminium, ou un matériau ayant sensiblement même coefficient de dilatation.

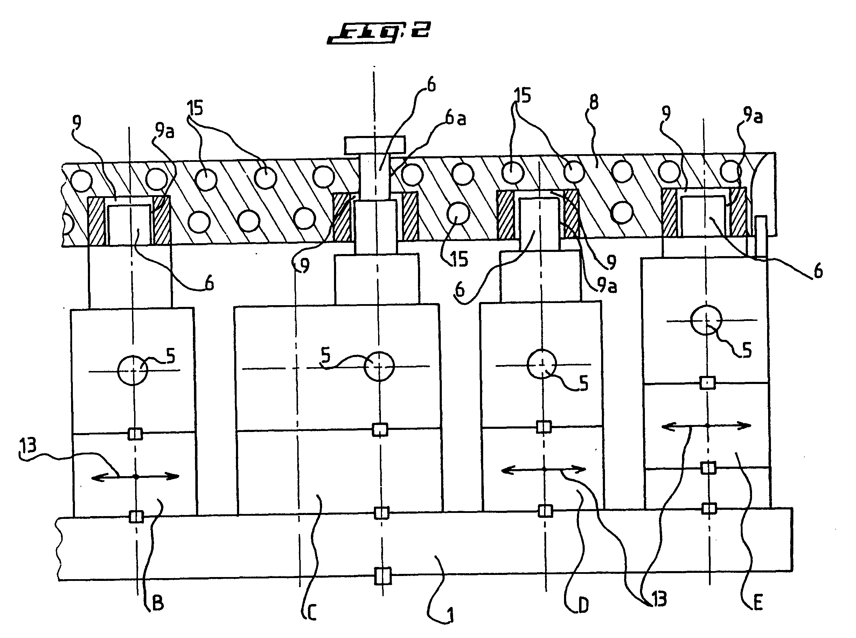

Comme on le voit bien sur la figure 2, la pige 6 du bloc d'usinage C est montée ajustée en 6a dans la plaque de mesure 8, tandis que les autres piges 6 appartenant respectivement aux blocs mobiles A, B, D et E sont engagées dans les logements 9 avec un jeu que l'on a montré en 9a.

Revenant à la figure 1, on voit en 10 un ensemble de capteurs mesurant le jeu 9a des piges 6 dans leurs logements 9 et déterminant le décentrage, cela par application d'un procédé connu en soi de mesure différentielle de débits d'air au travers d'orifices débouchant dans le jeu 9a.

Des coffrets de mesure 11 transforment les débits différentiels en signaux électriques qui sont caracteristiques des défauts de centrage des piges. Les signaux issus des coffrets 11 sont envoyés dans des boîtiers ou analogues 12 de commande des blocs mobiles A, B, D, et E pour recentrer les piges 6.

Selon un système connu pour le réglage des machines outils, et qui n'est pas représenté ici, les blocs d'usinage sont montés glissants sur le socle 1 en étant reliés à ceux-ci par des paires de ressorts à lames de grande rigidité autorisant un déplacement limité. Les boîtiers 12 transforment les signaux de décentrage en pressions hydrauliques qui déplacent les blocs d'usinage A, B, D, E. Lorsque les piges 6 sont centrées, les broches 5 forment des entr'axes qui correspondent à la pièce dilatée à la température d'usinage.

L'installation selon l'invention comprend également une centrale d'arrosage 14 qui alimente un circuit fermé de liquide d'arrosage de la pièce 7 en cours d'usinage. Cet arrosage doit être suffisamment abondant pour assurer l'équilibre thermique du liquide et de la pièce 7 en évacuant les calories dégagées par l'usinage. La température du liquide d'arrosage varie en fonction de la température ambiante et de la quantité de calories évacuées.

La centrale d'arrosage 14 alimente également la plaque de mesure 8 pour assurer l'homogénéisation de la température de ladite plaque ainsi que l'égalité de la température de celle-ci avec la température de la pièce 7. Plus précisément, la plaque 8, comme on le voit bien sur la figure 2, comporte un circuit interne d'écoulement de liquide constitué par des perçages 15 par lesquels passe le liquide, ce qui, encore une fois, permet l'homogénéisation thermique de la plaque 8 et de la pièce 7.

On a donc réalisé suivant l'invention un dispositif simple qui permet de ramener les entr'axes des broches d'un ensemble d'usinage aux valeurs correspondant à la dilatation de la pièce à usiner, ce dispositif évitant avantageusement l'emploi de moyens coûteux tels que la climatisation des locaux d'usinage, de lubrification et de stockage des pièces à usiner.

## Revendications

1. Dispositif d'usinage à broches multiples (5) qui permettent d'effectuer simultanément sur une pièce (7) une pluralité d'usinages, dont les axes longitudinaux s'étendent suivant la même direction, et qui sont portées par des blocs (A, B, C, D, E) supportant chacun une broche d'usinage (5) et montés sur un socle (1), tandis que la distance entre lesdits axes longitudinaux peut être modifiée selon les températures et que l'un (C) desdits blocs est monté fixe sur le socle (1) pour servir de référence, caractérisé en ce qu'il comprend une plaque (8) munie d'orifices ou logements (9) dans lesquels s'engagent respectivement des piges de mesure (6) portées respectivement par lesdits blocs, ledit bloc (C) servant de référence portant une pige montée ajustée (6a) dans l'un des logements de la plaque (8) et tous les autres blocs (A, B, D, E) montés glissants sur le socle (1) portant chacun une pige montée avec jeu (9a) dans les autres logements de la plaque, tandis qu'un système de régulation en boucle fermée comportant des capteurs (10) aptes à mesurer le décentrage des piges (6) dans les logements (9) de la plaque (8) et à solliciter des moyens (12) de commande des blocs mobiles (A, B, D, E) pour recentrer les piges associées à ces blocs dans les logements de la plaque (8), permet de ramener la distance entre les axes longitudinaux des broches (5) à une valeur correspondant à la dilatation de la pièce à usiner (7).

2. Dispositif selon la revendication 1, caractérisé en ce que la plaque (8) comporte un circuit (15) d'homogénéisation thermique dans lequel circule un liquide.

3. Dispositif selon la revendication 1 ou 2, caractérisé en ce qu'il comprend une centrale d'arrosage (14) qui assure en circuit fermé, l'alimentation du circuit d'homogénéisation (15) dans la plaque (8), et l'arrosage de la pièce (7) en cours d'usinage.

## Patentansprüche

1. Bearbeitungsvorrichtung mit mehreren Räumwerkzeugen (5) welche die gleichzeitige Durchführung einer Mehrzahl von Bearbeitungen an einem Werkstück (7) ermöglichen, deren Längsachsen in der selben Richtung verlaufen und die durch jeweils ein Bearbeitungsräumwerkzeug (5) tragende und an einem Sockel (1) angeordnete Blöcke (A, B, C, D, E) getragen werden, während der Abstand zwischen den besagten Längsachsen gemäss den Temperaturen geändert werden kann und einer (C) der besagten Blöcke feststehend an dem Sockel (1) angeordnet ist, um als Bezug zu dienen, dadurch gekennzeichnet, dass sie eine Platte (8) aufweist, die mit Offnungen bzw. Ausnehmungen (9) versehen ist, in welche jeweils von den besagten Blöcken jeweils getragene Messstäbe (6) eingreifen, wobei der besagte, als Bezug dienende Block (C) einen in einer der Ausnehmungen der Platte (8) passend angeordneten Messstab (6a) trägt und alle anderen gleitbar an dem Sockel (1) angeordneten Blöcke (A, B, D, E) jeder einen in den anderen Ausnehmungen der Platte mit Spiel angeordneten Messstab (9a) trägt, während ein Regelsystem mit geschlossenem Wirkungskreis, mit Messwertgeber (10) die fähig sind, die Dezentrierung der Messstäbe (6) in den Ausnehmungen (9) der Platte (8) zu messen und Mittel (12) zur Betätigung der beweglichen Blöcke (A, B, D, E) zu beaufschlagen, um die den Blöcken zugeordneten Messstäbe in den Ausnehmungen der Platte (8) wieder zu zentrieren, ermöglicht, den Abstand zwischen den Längsachsen der Räumwerkzeuge (5) auf einen der Ausdehnung des zu bearbeitenden Werkstückes (7) entsprechenden Wert zurückzubringen.

2. Vorrichtung nach Anspruch 1, dadurch gekennzeichnet, dass die Platte (8) einen thermischen Homogenisierungskreislauf (15) in welchem eine Flüssigkeit fliesst, aufweist.

3. Vorrichtung nach Anspruch 1 oder 2, dadurch gekennzeichnet, dass sie eine Besprengungszentrale (14) umfasst, welche im geschlossenen Kreislauf die Speisung des Homogenisierungskreislaufes (15) in der Platte (8) und das Besprengen des sich in der Bearbeitung befindenden Werkstücks (7) gewährleistet.

**Claims**

1. Machining device with multiple broaches (5) which allow to simultaneously effect on a work piece (7) a plurality of machinings the longitudinal axes of which extend in the same direction and which are carried by blocks (A, B, C, D, E) supporting each one a machining broach (5) and mounted on a base (1) whereas the distance between the said longitudinal axes may be modified according to the temperatures and one (C) of the said blocks is mounted in fixes relationship onto the base (1) to serve as a reference, characterized in that it comprises a plate (8) provided with openings or recesses (9) which are respectively engaged by measuring rods (6) carried by the said blocks, respectively, the said block (C) serving as a reference carrying a measuring rod mounted in fitted relationship (6a) in one of the recesses of the plate (8) and all the other blocks (A, B, D, E) mounted in sliding relationship onto the base (1) carrying each one a measuring rod mounted with a play (9a) within the other recesses of the plate whereas one closed-loop control system comprises sensors (10) adapted to measure the decentering of the measuring rods (6) in the recesses (9) of the plate (8) and to urge means (12) fore operating the movable blocks (A, B, D, E) to recentre the measuring rods associated with these blocks in the recesses of the plate (8), allow to restore the distance between the longitudinal axes of the broaches (5) to a value corresponding to the expansion of the work piece to be machined (7).

2. Device according to claim 1, characterized in that the plate (8) comprises a thermal homogenization circuit (15) in which a liquid is circulating.

3. Device according to claim 1 or 2, characterized in that it comprises a central sprinkling station (14) which provides in a closed circuit the feeding of the homogenization circuit (15) in the plate (8) and the sprinkling upon the work piece (7) being machined.

Fig.1

Fig. 2